# EUROPÄISCHE PATENTSCHRIFT

(11) **EP 4 100 244 B1**
(45) Veröffentlichungstag und Bekanntmachung des Hinweises auf die Patenterteilung: **02.04.2025**
(21) Anmeldenummer: 21702992.5
(22) Anmeldetag: 01.02.2021
(51) Int. Cl.: B31D 5/00, B31F 1/00, B31F 7/00

(54) **TRINKHALMHERSTELLUNG**
PRODUCTION OF DRINKING STRAWS
PRODUCTION DE PAILLES

(30) Priorität: 04.02.2020 DE 102020102722
(43) Veröffentlichungstag der Anmeldung: 14.12.2022
(73) Patentinhaber: Körber Technologies GmbH, 21033 Hamburg (DE)
(72) Erfinder: TOBIAS, Jörg, Drage 21423 (DE)
(74) Vertreter: Seemann & Partner Patentanwälte mbB
(86) Internationale Anmeldenummer: PCT/EP2021/052272
(87) Internationale Veröffentlichungsnummer: WO 2021/156185

(56) Entgegenhaltungen:
- EP-A1- 2 366 295
- EP-A1- 3 357 354
- EP-B1- 2 845 499
- DE-A1- 3 603 748
- DE-U1- 202018 107 331
- KR-B1- 102 054 114
- US-A- 2 246 043
- US-A1- 2019 380 520

## Beschreibung

Die Erfindung betrifft ein Verfahren zum Herstellen eines Trinkhalms sowie eine Trinkhalmherstellvorrichtung.

Zur Herstellung von Trinkhalmen aus Kunststoff wird über eine geschlossene Form Kunststoff extrudiert. Ursprünglich wurden Trinkhalme auch aus Papierröhrchen hergestellt, bei denen Papierstreifen spiralförmig über ein Rohr gewickelt, geklebt und mit einer Paraffinschicht überzogen wurden. Der erste künstlich hergestellte Strohhalm bzw. Trinkhalm war aus Papier (siehe hierzu http:// www.cusmiq.de/qa/show/851342/wie-werden-trinkhalme-hergestellt/). Hierzu sei zudem auf die US 3 203 325 A und die GB 787 981 A verwiesen. Die wickelnde Fertigung von Trinkhalmen aus Papier stellt ein vergleichsweise langsames Herstellungsverfahren dar.

In der Zigarettenfilterherstellung ist es bekannt, Hohlrohre aus wenigstens zweilagigem Papier in einer Formatvorrichtung bei der längsaxialen Förderung des Papiers herzustellen. Hierzu sei auf die DE 10 2017 114 910 A1 sowie DE 10 2014 226 019 A1 und DE 10 2016 124 051 A1 der Anmelderin verwiesen. Hierdurch können sehr effizient Hohlrohre aus doppellagigen Materialstreifenabschnitten hergestellt werden.

KR 102 054 114 B1 zeigt eine Vorrichtung zur kontinuierlichen Herstellung von Papierstrohhalmen aus einer Papierrolle.

US 2 246 043 A zeigt eine Maschine zum Herstellen von Hohlrohren aus Papier.

In EP 2 366 295 A1 ist ein Verfahren zum Bearbeiten eines Umhüllungsmaterialstreifens für stabförmige Artikel der Tabak verarbeitenden Industrie gezeigt.

EP 3 357 354 A1 zeigt ein Verfahren zum Herstellen eines Strangs der Tabak verarbeitenden Industrie sowie eine Strangformungsvorrichtung.

In DE 36 03 748 A1 ist eine Vorrichtung zum Herstellen eines kontinuierlichen Röhrchens der Tabak verarbeitenden Industrie gezeigt.

In EP 2 845 499 B1 ist eine Papierröhrenherstellungsmaschine, ein Herstellungsverfahren für Papierröhren und mittels des Verfahrens hergestellte Papierröhren gezeigt.

US 2019 / 0 380 520 A1 zeigt beschichte Einmalstrohhalme bestehend aus Papier, dass mit abbaubarem Harz beschichtet ist.

In DE 20 2018 107 331 U1 ist ein Trinkhalm aus mindestens einer gewickelten Papierschicht gezeigt, welche aus einem semiopaken, hoch ausgemahlenen Faserstoff gebildet ist.

Es ist Aufgabe der vorliegenden Erfindung, Trinkhalme aus Papier effizient und verlässlich herzustellen.

Diese Aufgabe wird gelöst durch ein Verfahren zum Herstellen eines Trinkhalms in einem Strangverfahren mit den folgenden Merkmalen:
- Abziehen eines Papierstreifens von einer Papierstreifenrolle, wobei der Papierstreifen eine erste Kante und eine zweite Kante aufweist, die parallel zu einer Längsachse des Papierstreifens angeordnet sind,
- Zuführen des Papierstreifens in einer längsaxialen Förderrichtung zu einer Formatvorrichtung,
- Formen des Papierstreifens zu einem Hohlrohr in der Formatvorrichtung, wobei die erste Kante innenliegend und die zweite Kante außenliegend ist und ein Teil des Papierstreifens die erste Kante überlappt und einen Überlappungsbereich definiert, der längsaxial am Hohlrohr ausgebildet ist oder wird,
- Verschließen des Hohlrohrs mittels einer Heißleim-Beleimvorrichtung und
- Ablängen des Hohlrohrs in Trinkhalme,
wobei der Papierstreifen ein spezifisches Gewicht von 200 g/m² bis 480 g/m² hat, wobei der Durchmesser des Trinkhalms über einen Abstand eines Oberformats oder einer Nahtplätte zu einem Unterformat der Formatvorrichtung gesteuert oder geregelt ist oder wird.

Hier können sehr effizient und mit einer hohen Geschwindigkeit Trinkhalme hergestellt werden, die eine für den Gebrauch ausreichende Qualität aufweisen. Es werden somit Trinkhalme hergestellt, die eine Nahtüberlappung aufweisen. Im Rahmen der Erfindung wird insbesondere ein einziger Papierstreifen zu einem Hohlrohr bzw. einem Hohlstrang geformt.

Vorzugweise drückt beim Formen und/oder Verschließen ein Gegenlager gegen den Überlappungsbereich. Beispielsweise kann als Gegenlager ein Dorn dienen, über den der Papierstreifen gezogen wird, um beim Schließen des Papierstreifens im Hohlrohr bzw. Hohlrohrstrang einen Gegendruck zu erzeugen. Ein entsprechendes Gegenlager kann vorzugsweise auch räumlich entfernt nach dem Verschließen des Hohlrohrs vorgesehen sein. Ein Hohlrohr kann im Rahmen der Erfindung auch ein Hohlrohrstrang oder ein Hohlstrang sein. Es wird ein stabiles Papier als Papierstreifen verwendet. Unter einem stabilen Papier wird ein Papier verstanden, das ein spezifisches Gewicht von 200 g/m² bis 480 g/m², insbesondere vorzugsweise 300 g/m² bis 460 g/m^{2,} insbesondere vorzugsweise 350 g/m² bis 440 g/m² hat.

Auf diese Weise können Trinkhalme besonders effizient mit einer Längsnaht, die durch ein Überlappen eines Teils des Papierstreifens über die andere Seite des Papierstreifens erfolgt, hergestellt werden.

Vorzugsweise wird zum Verschließen der Überlappungsbereich gerändelt und/oder verklebt.

Eine besonders einfache, effiziente und sichere Herstellung ist dann gegeben, wenn zum Verkleben ein Klebstoff vor dem Formen oder vor dem Verschließen auf wenigstens einer Seite des Papierstreifens im Überlappungsbereich aufgebracht wird.

Eine besonders feste Verbindung ist dann gegeben, wenn auf zwei sich im geschlossenen Zustand berührenden Seiten des Papierstreifens vor dem Verschließen Klebstoff aufgebracht wird. Der auf diesen beiden Seiten des Papierstreifens aufgebrachte Klebstoff kann so vor dem Verschließen schon in den Papierstreifen bzw. das Papiermaterial eindringen, so dass eine besonders effiziente Verklebung möglich ist.

Zum Verschließen kann der Überlappungsbereich auch gerändelt werden. Hierzu kann eine Rändelvorrichtung vorgesehen sein, die auf den Überlappungsbereich einwirkt und gegen ein Gegenlager eine Rändelbewegung ausführt, so dass die zwei Seiten des Papierstreifens, die zum Aufeinanderliegen kommen, und zwar im Überlappungsbereich, mechanisch ineinander verschränkt oder mechanisch miteinander verbunden werden.

Vorzugsweise wird zum Schließen des Überlappungsbereichs oder einer Naht des Hohlrohrs ein Druck auf wenigstens die außenliegende Kante des Papierstreifens oder den Überlappungsbereich ausgeübt. Hierzu ist beispielsweise ein Oberformat einer Formatvorrichtung vorgesehen oder eine Nahtplätte, die von außen auf den Überlappungsbereich drückt, und zwar gegen ein Gegenlager, beispielsweise einen innenliegenden Dorn oder einen auf den Überlappungsbereich von innen gerichteten Druckluftstrahl. Das Verschließen des Papierstreifens in ein Hohlrohr bzw. einen Hohlstrang kann so sein, dass der Papierstreifen nach oben gebogen wird. Der Papierstreifen kann auch zu einer Seite oder nach unten gebogen werden. In dem Fall, dass der Überlappungsbereich untenliegend ist, kann die Nahtplätte unten vorgesehen sein und beispielsweise ein Unterformat gegen den Papierstreifen und das Gegenlager drücken. Sinnvollerweise findet das Drücken bzw. das Druckausüben auf den Überlappungsbereich an der Stelle statt, an der der Überlappungsbereich liegt.

Vorzugsweise wird der Papierstreifen vor dem Formen befeuchtet, um eine etwaige im Papier vorliegende Spannung zu verringern, damit sich das hergestellte Hohlrohr nach dem Verkleben nicht gleich wieder öffnet und somit eine ausreichende Trocknungszeit zur Verfügung steht.

Vorzugsweise wird das Hohlrohr bzw. der Hohlstrang nach dem Formen getrocknet.

Um dem Papierstreifen eine vorgebbare und gewünschte Feuchtigkeit zukommen zu lassen, ist es bevorzugt, wenn die Feuchtigkeit des Papierstreifens vor und/oder nach dem Befeuchten gemessen wird. Es kann dann eine Steuerung und/oder eine Regelung auf eine gewünschte Feuchtigkeit des Papierstreifens durchgeführt werden.

Vorzugsweise wird der Papierstreifen vor dem Formen bedruckt. Das Bedrucken kann auf einer Seite des Papierstreifens vorgenommen werden, der nach dem Formen zum Hohlrohr innen liegt als auch auf der Außenseite.

Vorzugsweise wird die außenliegende Kante des Hohlrohrs geprägt, gepresst und/oder abgeschrägt, um die Dicke der Kante zu verringern.

Vorzugsweise wird das Papier insbesondere in dem Bereich, in dem dieses mit Klebstoff versehen wird, vor dem Versehen mit Klebstoff angeraut.

Der Durchmesser des Trinkhalms ist oder wird über einen Abstand eines Oberformats oder einer Nahtplätte zu einem Unterformat der Formatvorrichtung oder über einen Durchmesser der Formatvorrichtung gesteuert oder geregelt, vorzugsweise eingestellt.

Vorzugsweise ist die Ablängvorrichtung eine Schneidvorrichtung, die vorzugsweise wenigstens ein Messer umfasst. Die Schneidvorrichtung bzw. das Messer wird vorzugsweise mit einem Öl benetzt und/oder weist eine Teflonbeschichtung auf.

Vorzugsweise ist der Papierstreifen so angeordnet, dass die Siebseite des Papierstreifens im Hohlraum außenliegend und die Filzseite innenliegend ist.

Ferner vorzugsweise werden gleichzeitig zwei Hohlrohre bzw. Hohlstränge hergestellt, wobei die beiden Hohlrohre bzw. Hohlstränge wenigstens abschnittsweise parallel gefördert werden. Zum Vorsehen nur einer Schneidvorrichtung für zwei Hohlrohre bzw. Hohlstränge, um hieraus Trinkhalme abzulängen bzw. abzuschneiden, wird der Abstand der Hohlrohre bzw. Hohlstränge minimiert. Beispielsweise in einem Bereich von 5 cm bis 15 cm. Vorzugsweise ist der Abstand der beiden Hohlrohre bzw. Hohlstränge 5 cm bis 10 cm.

Die hergestellten Trinkhalme können einen Durchmesser von 3 mm bis 20 mm aufweisen. Bevorzugt ist ein Durchmesser zwischen 4 mm und 15 mm, insbesondere bevorzugt zwischen 6 mm und 10 mm.

Vorzugsweise ist eine Papierstreifenrollenwechselvorrichtung vorgesehen, die dafür sorgt, dass das eine Ende einer Papierstreifenrolle mit dem Anfang einer zweiten Papierstreifenrolle verbunden wird, so dass quasi unendlich lange Papierstreifen zur Verfügung gestellt werden können.

Das Aufbringen des Klebstoffs auf die Papierstreifen kann über Klebstoffdüsen oder Leimdüsen mit oder ohne Kontakt mit dem Papier, aber auch über eine Scheibenbeleimung erfolgen. Hierdurch werden eine oder mehrere Leimspuren bzw. Klebstoffspuren auf die Papierstreifen aufgebracht. Bei Verwendung von mehreren Leimspuren bzw. Klebstoffspuren können diese so aufgebracht werden, dass sie sich beim späteren Verkleben der Papierstreifen wenigstens teilweise direkt berühren. Der Vorteil ist, dass, wenn man auf beide Papierseiten des Papierstreifens vor der Verklebung Klebstoff aufbringt, dieser Klebstoff mehr Zeit hat, sich vor einer Strangbildung, Papierrohrbildung oder Hohlrohrbildung mit dem Papier zu verbinden. Dies kann beispielsweise dann von Vorteil sein, wenn der Papierstreifen, der später als Trinkhalm verwendet werden soll, weniger flüssigkeitssaugfähig ist als übliches Papiermaterial und so der Trinkhalm später bei Flüssigkeitskontakt längere Zeit stabil bleibt.

Der Klebstoff kann nach dem Aufbringen vorzugsweise noch thermisch behandelt werden, beispielsweise mit einer Infrarotheizung oder einer Kontaktheizung, um die Klebeigenschaften zu verbessern oder eine schnellere Verklebung oder Abbindung zu begünstigen. Das Aufbringen des Klebstoffs kann vor dem Verbiegen des Papierstreifens zu einem Hohlrohr bzw. zu einem Hohlstrang vorgenommen werden oder kurz vor dem Verschließen des Hohlrohrs.

Nach dem Aufbringen des Klebstoffs wird der oder werden die Papierstreifen über äußere Führungen so gebogen, dass die Seiten des Papierstreifens nach oben oder unten gebogen und schließlich zu einem runden Strang bzw. einem Hohlrohr übereinandergelegt werden. Das Biegen kann auch seitlich geschehen. Beim Übereinanderlegen überlappen sich die beiden Seiten des Papierstreifens. Zum Transport des Papierstreifens während der Formung wird der Papierstreifen auf ein Gewebeband, beispielsweise ein Formatband, gelegt, das beispielsweise ein geschlossenes Endlosband ist, das über Rollen angetrieben wird und soweit flexibel ist, dass es die Umformung von einer flachen in eine runde Form gewährleistet und die Form auf den aufgelegten Papierstreifen überträgt.

Um einen Auftrag eines Klebstoffs kurz vor dem Verschließen des Hohlrohrs bzw. des Hohlstrangs zu ermöglichen, wird eine Seite des Papierstreifens abstehend gelassen, wobei dann auf der der anderen Papierseite zugewandten Seite ein Klebstoff aufgetragen wird. Anschließend werden beide Seiten aufeinandergepresst, so dass sich ein Überlappungsbereich ergibt, bei dem eine Verklebung stattfindet. Auch an dieser Stelle kann auf beiden Papierseiten ein Klebstoff aufgebracht werden, so dass zwei Klebstoffseiten zusammengeführt werden.

Als Klebstoffe kommen Heißleime in Betracht Zum Schließen der Naht bzw. des Überlappungsbereichs wird vorzugsweise von oben mit einer Nahtplätte auf das Papier gedrückt. Die Nahtplätte kann erhitzt oder gekühlt werden, um das Abbinden des Klebstoffs zu beschleunigen, je nachdem welcher Klebstoff gewählt wurde. Zum Erzeugen eines Gegendrucks beim Schließen der Naht kann das Papier um einen Dorn gezogen werden, der von vorne in den Papierstrang oder das Hohlrohr hineinragt. Der Dorn kann auch erhitzt oder gekühlt werden, so dass eine optimale Verklebung des Hohlstrangs oder des Hohlrohrs erfolgt. Durch eine verstellbare Nahtplätte kann vorzugsweise der Durchmesser eingestellt oder automatisch geregelt werden. Der so verschlossene Hohlstrang bzw. das so verschlossene Hohlrohr wird vorzugsweise mittels rotierender Messer auf eine gewünschte Länge geschnitten.

Die Aufgabe wird ferner gelöst durch eine Trinkhalmherstellvorrichtung umfassend
- eine Papierstreifenrollenhalterung und eine Papierstreifenabziehvorrichtung, die ausgebildet ist, einen Papierstreifen von einer auf der Papierstreifenrollenhalterung angeordneten Papierstreifenrolle abzuziehen, wobei der Papierstreifen ein spezifisches Gewicht von 200 g/m² bis 480 g/m² hat,
- eine Formatvorrichtung, die ausgebildet ist, einen in einer Richtung parallel zur Längsachse des Papierstreifens durch die Formatvorrichtung geführten Papierstreifen zu einem Hohlrohr zu biegen, wobei ein Teil des Papierstreifens eine erste Kante des Papierstreifens überlappt, so dass sich ein Überlappungsbereich ergibt, der längsaxial am Hohlrohr ausgebildet ist, und
- eine Ablängvorrichtung, die ausgebildet ist, aus dem längsaxial geförderten Hohlrohr Trinkhalme abzulängen,
wobei die Formatvorrichtung ein Oberformat und/oder eine Nahtplätte aufweist, wobei das Oberformat oder die Nahtplätte im Abstand zu einem Unterformat einstellbar ist, wobei zum Verschließen des Hohlrohrs eine Heißleim-Beleimvorrichtung vorgesehen ist.

Vorzugsweise ist in der Formatvorrichtung ein Dorn vorgesehen, der als Gegenlager für den Überlappungsbereich von innen vorgesehen ist. Der Dorn kann beheizt oder gekühlt sein, um beispielsweise das Abbinden eines Klebstoffs, der zum Verkleben des Papierstreifens im Überlappungsbereich aufgetragen wurde, zu beschleunigen.

Vorzugsweise ist in der Formatvorrichtung eine Druckluftdüse vorgesehen, die ausgebildet ist, Druckluft von innen auf den Überlappungsbereich zu richten. Die Druckluft kann insofern auch als Gegenlager für den Überlappungsbereich vorgesehen sein, damit von außen entsprechend Druck auf den Überlappungsbereich ausgeübt werden kann. Die Druckluft kann beispielsweise Heizluft oder Kühlluft sein, um einen etwaigen Klebstoff schneller abbinden zu lassen. Heizluft kann beispielsweise auch verwendet werden, um ein vorher angefeuchtetes Papier an dieser Stelle schon anzutrocknen bzw. vorzutrocknen.

Die Formatvorrichtung weist ein Oberformat und/ oder eine Nahtplätte auf, die im Abstand zu einem Unterformat einstellbar ist. Vorzugsweise weist die Formatvorrichtung einen einstellbaren Durchmesser auf.

Zum Verschließen des Hohlrohrs ist eine Beleimvorrichtung vorgesehen. Vorzugsweise ist zum Verschließen des Hohlrohrs eine Rändelvorrichtung vorgesehen. Die Beleimvorrichtung kann in Förderrichtung des Papierstreifens vor der Formatvorrichtung angeordnet sein. Es kann eine weitere oder alleinige Beleimvorrichtung auch im Bereich der Formatvorrichtung vorgesehen sein, dergestalt, dass ein Versehen mit Klebstoff des Papierstreifens geschieht, bevor dieser vollständig verschlossen wird.

Vorzugsweise ist eine Befeuchtungsvorrichtung vorgesehen, die ausgebildet ist, den Papierstreifen vor dem Formen zu befeuchten.

Ferner ist vorzugsweise eine Messvorrichtung vorgesehen, die die Feuchtigkeit des Papierstreifens vor dem Befeuchten und/oder nach dem Befeuchten misst und so eine Regelung oder Steuerung der Befeuchtungsvorrichtung ermöglicht.

Ferner vorzugsweise ist eine Anrauvorrichtung vorgesehen, die ausgebildet ist, wenigstens eine Seite des Papierstreifens im Überlappungsbereich anzurauen. Dies dient dazu, einen im Überlappungsbereich aufzubringenden Klebstoff besser in das Material des Papierstreifens eindringen zu lassen. Die Anrauvorrichtung kann auch den Papierstreifen von zwei Seiten anrauen, um beispielsweise die beiden Seiten des Papierstreifens auf ein Versehen mit Klebstoff vorzubereiten.

Vorzugsweise ist eine Pressvorrichtung und/oder eine Anschrägvorrichtung vorgesehen, die dazu dienen, eine außenliegende Kante des Hohlrohrs in der Dicke zu verkleinern. Hier kann beispielsweise in einem Pressvorgang, beispielsweise durch eine Pressrolle, oder abrasiv die außenliegende Kante des Hohlrohrs ausgedünnt werden, um so eine möglicherweise beim Nutzen des Trinkhalms vorliegende Kante nicht mehr als störend zu empfinden.

Vorzugsweise ist die Trinkhalmherstellvorrichtung so ausgebildet, dass wenigstens zwei Hohlrohre gleichzeitig herstellbar sind.

Die Trinkhalmherstellvorrichtung wird vorzugsweise zur Herstellung von Trinkhalmen verwendet.

In der einfachsten Form kann die Trinkhalmherstellvorrichtung ohne eine Gewichtsmessung des hergestellten Trinkhalms, ohne eine Durchmessermessung, ohne eine Querabgabe der hergestellten Trinkhalme und/oder ohne eine Regelung ausgebildet sein, also sehr einfach und kostengünstig hergestellt werden.

Vorzugsweise werden die hergestellten Trinkhalme in einer längsaxialen Förderrichtung in Sammelbehälter eingetragen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht einer erfindungsgemäßen Trinkhalmherstellvorrichtung,
- Fig. 2: eine schematische Ansicht eines Papierstreifens,
- Fig. 3: eine schematische Schnittdarstellung durch ein Hohlrohr,
- Fig. 4: eine schematische Darstellung eines erfindungsgemäßen Trinkhalms und
- Fig. 5: eine schematische Schnittdarstellung durch eine Formatvorrichtung.

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

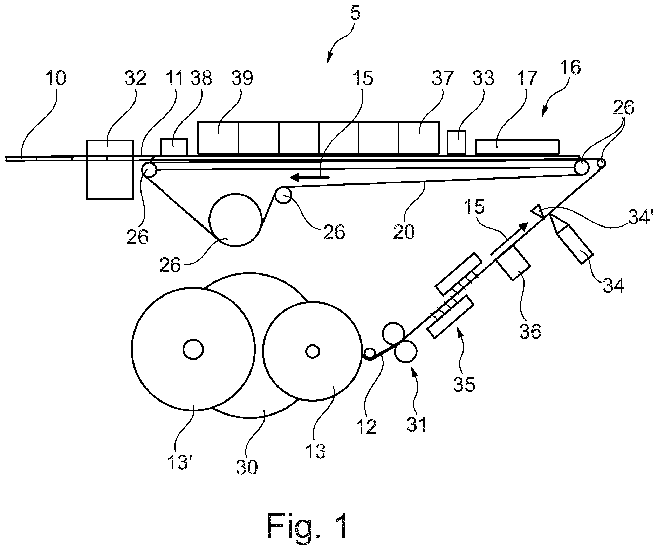

Fig. 1 zeigt in einer schematischen Ansicht eine erfindungsgemäße Trinkhalmherstellvorrichtung 5.

Von einer Papierstreifenrolle 13 wird ein Papierstreifen 12 vorzugsweise motorisch mittels einer Papierstreifenabziehvorrichtung abgezogen. Die Papierstreifenrolle 13, die auch als Bobine bezeichnet werden kann, ist auf einer Papierstreifenrollenhalterung 30 angeordnet. Auf der Papierstreifenrollenhalterung 30 ist zudem eine weitere noch volle Papierstreifenrolle 13' vorgesehen, deren Anfang mit dem Ende der Papierstreifenrolle 13 verbunden werden kann, um von dieser Rolle dann den Papierstreifen abziehen zu können, wenn die Papierstreifenrolle 13 sich dem Ende neigt. Die Papierstreifenrollenhalterung 30 kann dann um 180 ° gedreht werden und die leere Papierstreifenrolle 13 kann entnommen werden, um eine neue Papierstreifenrolle 13 auf die Papierstreifenrollenalterung 30 aufzubringen. Hierdurch kann ein ununterbrochener Betrieb der Trinkhalmherstellvorrichtung 5 erzielt werden.

Der Papierstreifen 12 durchläuft nach dem Abziehen von der Papierstreifenrolle 13 zunächst eine Befeuchtungsvorrichtung 35, die beispielsweise einen Wassernebel mit einstellbarer Nebeldichte bzw. Feuchtigkeit aufweisen kann. Der Papierstreifen 12 wird in Förderrichtung 15 gefördert, und zwar an einer optionalen Anrauvorrichtung 36 vorbei. Es folgt hieran in Förderrichtung eine Beleimvorrichtung 34, die Klebstoff auf die eine Seite, in diesem Fall die Innenseite des Papierstreifens 12, aufbringt. Alternativ kann über eine Beleimvorrichtung 34', die in Fig. 1 schematisch dargestellt ist, die Außenseite des Papierstreifens 12 mit einer Klebstoffspur oder mehreren Klebstoffspuren versehen werden.

Der Papierstreifen 12 wird dann um eine Rolle 26 umgelenkt und in Richtung einer Formatvorrichtung 16 geführt. Die Formatvorrichtung 16 ist in Fig. 1 nur schematisch dargestellt. Es ist das Oberformat 17 dargestellt. Das Unterformat ist nicht dargestellt. Tatsächlich ist in Fig. 1 allerdings ein Formatband 20, das über Rollen 26 gelenkt und quasi als Endlosband ausgelegt ist, dargestellt, das in dem nicht dargestellten Unterformat geführt wird.

In der Formatvorrichtung 16 wird aus dem Papierstreifen 12 ein Hohlrohr 11 bzw. ein Hohlstrang gebildet. Das Oberformat 17 drückt hierbei auf den Überlappungsbereich 23, so dass, falls ein Klebstoff verwendet wurde, eine Vorfixierung bzw. ein Schließen des Papierstreifens 12 zu einem Hohlrohr 11 in der Formatvorrichtung 16 geschieht. Anschließend kann noch eine Pressvorrichtung 37 vorgesehen sein, die dafür sorgt, dass der Überlappungsbereich 23 geschlossen bleibt, bis der Klebstoff ausreichend abgebunden hat. Die Pressvorrichtung 37 kann über die gesamte Strecke bis zum Ende des Laufs des Formatbands 20 in der längsaxialen Förderrichtung 15 vorgesehen sein. Die Pressvorrichtung 37 kann zudem eine Heizvorrichtung oder eine Kühlvorrichtung 39 sein oder umfassen, die das Abbinden des Klebstoffes ja nach Art des Klebstoffes unterstützt.

Zudem kann eine Trocknungsvorrichtung an dieser Stelle vorgesehen sein, die in Fig. 1 nicht dargestellt ist bzw. die auch Bestandteil der Pressvorrichtung 37 oder der Heiz- oder Kühlvorrichtung 39 sein kann. Zudem kann sich der Pressvorrichtung 37 eine Anschrägvorrichtung 38 anschließen, um die Kante der äußeren Papierlage anzuschrägen. Anstelle des Vorsehens von Klebstoff auf dem Papierstreifen 12 oder ergänzend hierzu kann eine Rändelvorrichtung 33 vorgesehen sein, die sich beispielsweise an die Formatvorrichtung 16 anschließt.

Nach Herstellen des Hohlrohrs 11 wird dieses mit einer Ablängvorrichtung 32, beispielsweise einer rotierenden Messervorrichtung, in Trinkhalme 10 abgelängt.

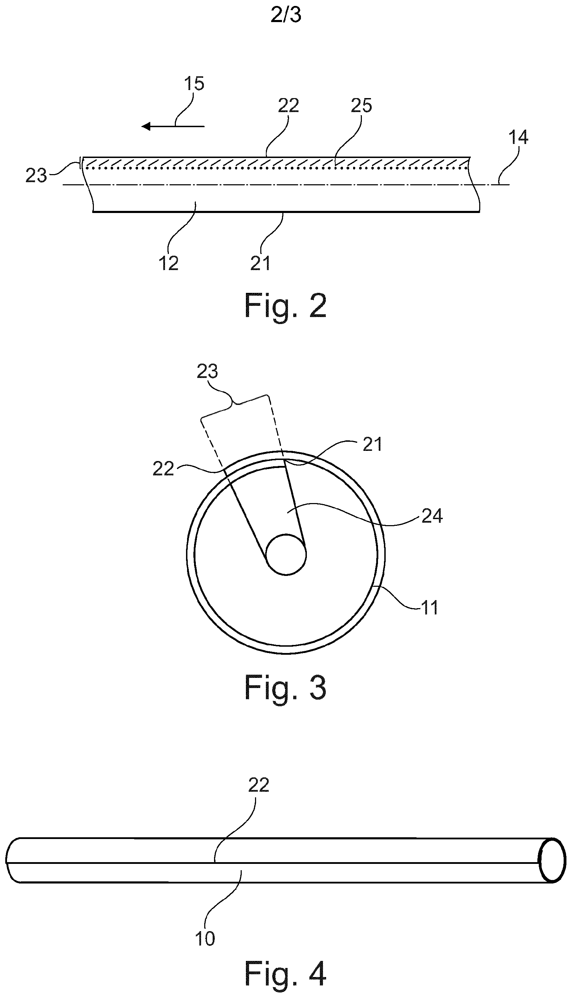

Fig. 2 zeigt schematisch eine Draufsicht auf einen in Förderrichtung 15 geförderten Papierstreifen 12. Der Papierstreifen 12 weist eine Längsachse 14 auf, so dass die Förderrichtung 15 in der Längsachse 14 ist. Der Papierstreifen 12 weist eine erste Kante 21 und eine zweite Kante 22 auf. In den hier vorliegenden Ausführungsbeispielen ist die erste Kante 21 innenliegend und die zweite Kante 22 außenliegend im Hohlrohr 11 bzw. dem Trinkhalm 10 angeordnet. Es ist zudem in einem Überlappungsbereich 23 ein Klebstoff 25 schematisch in Fig. 2 aufgebracht dargestellt. Der Papierstreifen 12 wird in der Fig. 2 nach oben gebogen und zu einem Rohr umgebildet, so dass die erste Kante 21 innenliegend ist und die zweite Kante 22 außenliegend, so dass der Überlappungsbereich 23 auf der in Fig. 2 verdeckt dargestellten Seite verklebt wird.

Fig. 3 zeigt schematisch einen Schnitt durch ein hergestelltes Hohlrohr 11 im Bereich der Formatvorrichtung 16 an der Stelle, an der das Hohlrohr 11 schon geschlossen ist. An dieser Stelle ist ein Dorn als Gegenlager 24 vorgesehen, um im Überlappungsbereich 23 von außen einen Druck auf den Überlappungsbereich 23 des Papierstreifens 12 vorzusehen, so dass bis zu einem zumindest teilweisen Abbinden des Klebstoffes ein Gegendruck durch den Dorn bzw. das Gegenlager 24 hergestellt werden kann.

Fig. 4 zeigt schematisch in einer dreidimensionalen Darstellung einen hergestellten Trinkhalm 10, der eine Längsnaht in Form der zweiten Kante 22 aufweist.

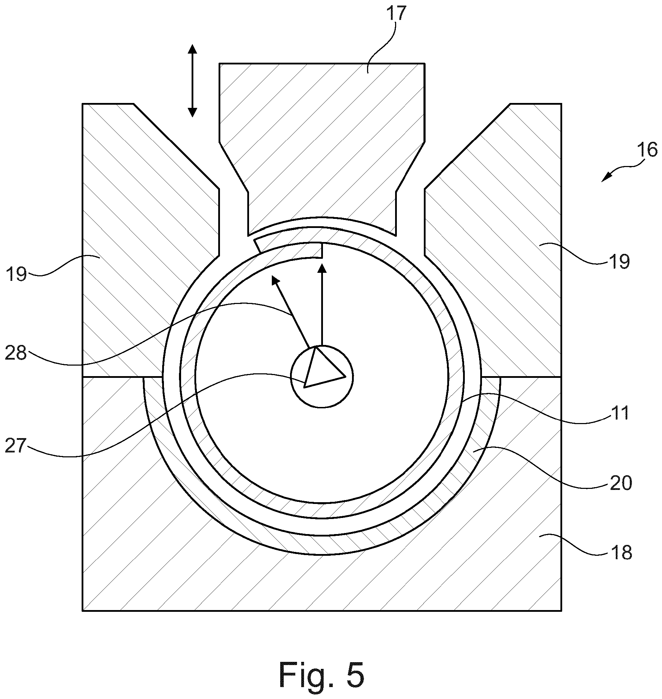

Fig. 5 zeigt in einer schematischen Darstellung einen Schnitt durch eine Formatvorrichtung 16, bei der anstelle des Dorns oder zusätzlich zum Dorn eine Druckluftdüse 27 gezeigt ist, die Druckluft 28 auf den Übergangsbereich von innen bläst, um so ein Gegenlager durch Druckluft 28 zu dem Oberformat 17 herzustellen. Die Formatvorrichtung 16 weist hier ein Unterformat 18 auf, in dem sowohl ein Formatband 20 sowie zwei Seitenwangen 19 als auch das Oberformat 17 gelagert sind. Das Oberformat 17 kann in der Höhe oder im Abstand, wie durch den Doppelpfeil gezeigt ist, relativ zum Unterformat 18 eingestellt werden, um den Querschnitt des hergestellten Hohlrohrs 11 einzustellen. Zur besseren Übersichtlichkeit ist das Hohlrohr 11 in Fig. 5 vom Durchmesser kleiner dargestellt als dieses tatsächlich in der Formatvorrichtung 16 wäre. Tatsächlich wäre das Hohlrohr 11 an den Innenwänden der Seitenwangen 19 des Oberformats 17 sowie an der Innenseite des Formatbands 20 anliegend. In diesem Ausführungsbeispiel hat das Formatband 20 eine Breite, die der Kontur des Unterformats 18 angepasst ist. Es kann auch eine Ausführungsform vorgesehen sein, bei der das Formatband 20 beispielsweise drei Viertel des Umfangs der Innenfläche der Formatvorrichtung 16 ausfüllen kann oder 80 % hiervon.

Durch die Erfindung ist es möglich, auf sehr einfache, effiziente und kostengünstige Weise Trinkhalme aus Papier herzustellen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 5: Trinkhalmherstellvorrichtung
- 10: Trinkhalm
- 11: Hohlrohr
- 12: Papierstreifen
- 13, 13': Papierstreifenrolle
- 14: Längsachse
- 15: Förderrichtung
- 16: Formatvorrichtung
- 17: Oberformat
- 18: Unterformat
- 19: Seitenwange
- 20: Formatband
- 21: erste Kante
- 22: zweite Kante
- 23: Überlappungsbereich
- 24: Gegenlager
- 25: Klebstoff
- 26: Umlenkrolle
- 27: Druckluftdüse
- 28: Druckluft
- 30: Papierstreifenrollenhalterung
- 31: Papierstreifenabziehvorrichtung
- 32: Ablängvorrichtung
- 33: Rändelvorrichtung
- 34, 34': Beleimvorrichtung
- 35: Befeuchtungsvorrichtung
- 36: Anrauvorrichtung
- 37: Pressvorrichtung
- 38: Anschrägvorrichtung
- 39: Heiz- oder Kühlvorrichtung

## Patentansprüche

1. Verfahren zum Herstellen eines Trinkhalms (10) in einem Strangverfahren mit den folgenden Merkmalen:
- Abziehen eines Papierstreifens (12) von einer Papierstreifenrolle (13, 13'), wobei der Papierstreifen (12) eine erste Kante (21) und eine zweite Kante (22) aufweist, die parallel zu einer Längsachse (14) des Papierstreifens (12) angeordnet sind,
- Zuführen des Papierstreifens (12) in einer längsaxialen Förderrichtung (15) zu einer Formatvorrichtung (16),
- Formen des Papierstreifens (12) zu einem Hohlrohr (11) in der Formatvorrichtung (16), wobei die erste Kante (21) innenliegend und die zweite Kante (22) außenliegend ist und ein Teil des Papierstreifens (12) die erste Kante (21) überlappt und einen Überlappungsbereich (23) definiert, der längsaxial am Hohlrohr (11) ausgebildet ist oder wird,
- Verschließen des Hohlrohrs (11) mittels einer Heißleim-Beleimvorrichtung (34, 34') und
- Ablängen des Hohlrohrs (11) in Trinkhalme (10),
wobei der Papierstreifen (12) ein spezifisches Gewicht von 200 g/m² bis 480 g/m² hat, wobei der Durchmesser des Trinkhalms über einen Abstand eines Oberformats (17) oder einer Nahtplätte zu einem Unterformat (18) der Formatvorrichtung (16) gesteuert oder geregelt ist oder wird.

2. Verfahren nach Anspruch 1, **dadurch gekennzeichnet, dass** beim Formen und/oder Verschließen ein Gegenlager (24) gegen den Überlappungsbereich (23) drückt.

3. Verfahren nach Anspruch 1 oder 2, **dadurch gekennzeichnet, dass** zum Verschließen der Überlappungsbereich (23) gerändelt und/oder verklebt wird.

4. Verfahren nach Anspruch 3, **dadurch gekennzeichnet, dass** zum Verkleben ein Klebstoff (25) vor dem Formen oder vor dem Verschließen auf wenigstens einer Seite des Papierstreifens (12) im Überlappungsbereich (23) aufgebracht wird.

5. Verfahren nach Anspruch 4, **dadurch gekennzeichnet, dass** auf zwei sich im geschlossenen Zustand berührende Seiten des Papierstreifens (12) vor dem Verschließen Klebstoff (25) aufgebracht wird.

6. Verfahren nach einem der Ansprüche 1 bis 5, **dadurch gekennzeichnet, dass** zum Schließen des Überlappungsbereichs (23) ein Druck auf wenigstens die außenliegende Kante (22) des Papierstreifens (12) ausgeübt wird.

7. Verfahren nach einem der Ansprüche 1 bis 6, **dadurch gekennzeichnet, dass** der Papierstreifen (12) vor dem Formen befeuchtet wird.

8. Verfahren nach einem der Ansprüche 1 bis 7, **dadurch gekennzeichnet, dass** der Papierstreifen (12) vor dem Formen bedruckt wird.

9. Verfahren nach einem der Ansprüche 1 bis 8, **dadurch gekennzeichnet, dass** die außenliegende Kante (22) des Hohlrohrs (11) geprägt, gepresst und/oder abgeschrägt wird.

10. Trinkhalmherstellvorrichtung (5) umfassend
- eine Papierstreifenrollenhalterung (30) und eine Papierstreifenabziehvorrichtung (31), die ausgebildet ist, einen Papierstreifen (12) von einer auf der Papierstreifenrollenhalterung (30) angeordneten Papierstreifenrolle (13) abzuziehen, wobei der Papierstreifen (12) ein spezifisches Gewicht von 200 g/m² bis 480 g/m² hat,
- eine Formatvorrichtung (16), die ausgebildet ist, einen in einer Richtung parallel zur Längsachse (14) des Papierstreifens (12) durch die Formatvorrichtung (16) geführten Papierstreifen (12) zu einem Hohlrohr (11) zu biegen, wobei ein Teil des Papierstreifens (12) eine erste Kante (21) des Papierstreifens (12) überlappt, so dass sich ein Überlappungsbereich (23) ergibt, der längsaxial am Hohlrohr (11) ausgebildet ist, und
- eine Ablängvorrichtung (32), die ausgebildet ist, aus dem längsaxial geförderten Hohlrohr (11) Trinkhalme (10) abzulängen,
wobei die Formatvorrichtung (16) ein Oberformat (17) und/oder eine Nahtplätte aufweist, wobei das Oberformat (17) oder die Nahtplätte im Abstand zu einem Unterformat (18) einstellbar ist, wobei zum Verschließen des Hohlrohrs (11) eine Heißleim-Beleimvorrichtung (34, 34') vorgesehen ist.

11. Trinkhalmherstellvorrichtung (5) nach Anspruch 10, **dadurch gekennzeichnet, dass** in der Formatvorrichtung (16) eine Druckluftdüse (27) vorgesehen ist, die ausgebildet ist, Druckluft (28) von innen auf den Überlappungsbereich (23) zu richten.

12. Trinkhalmherstellvorrichtung (5) nach Anspruch 10 oder 11, **dadurch gekennzeichnet, dass** zum Verschließen des Hohlrohrs (11) eine Rändelvorrichtung (33) vorgesehen ist.

13. Trinkhalmherstellvorrichtung (5) nach einem der Ansprüche 10 bis 12, **dadurch gekennzeichnet, dass** eine Befeuchtungsvorrichtung (35) vorgesehen ist, die ausgebildet ist, den Papierstreifen (12) vor dem Formen zu befeuchten.

14. Trinkhalmherstellvorrichtung (5) nach einem der Ansprüche 10 bis 13, **dadurch gekennzeichnet, dass** eine Anrauvorrichtung (36) vorgesehen ist, die ausgebildet ist, wenigstens eine Seite des Papierstreifens (12) im Überlappbereich (23) anzurauen.

15. Trinkhalmherstellvorrichtung (5) nach einem der Ansprüche 10 bis 14, **dadurch gekennzeichnet, dass** eine Pressvorrichtung (37) und/oder eine Anschrägvorrichtung (38) vorgesehen ist, die dazu dienen, eine außenliegende Kante (22) des Hohlrohrs (11) in der Dicke zu verkleinern.

16. Trinkhalmherstellvorrichtung (5) nach einem der Ansprüche 10 bis 15, **dadurch gekennzeichnet, dass** die Trinkhalmherstellvorrichtung (5) ausgebildet ist, wenigstens zwei Hohlrohre (11) gleichzeitig, insbesondere parallel zueinander, herzustellen.

## Claims

1. A method for producing a drinking straw (10) in a continuous method, having the following features:
- pulling a paper strip (12) from a paper strip roll (13, 13'), wherein the paper strip (12) has a first edge (21) and a second edge (22) which are arranged parallel to a longitudinal axis (14) of the paper strip (12),
- feeding the paper strip (12) in a longitudinal axial conveying direction (15) to a formatting apparatus (16),
- shaping the paper strip (12) to form a hollow tube (11) in the formatting apparatus (16), wherein the first edge (21) is on the inside and the second edge (22) is on the outside, and a part of the paper strip (12) overlaps the first edge (21) and defines an overlapping region (23) which is or will be configured longitudinally axially on the hollow tube (11),
- sealing the hollow tube (11) by means of a hot-melt gluing apparatus (34, 34') and
- cutting the hollow tube (11) to length to form drinking straws (10),
wherein the paper strip (12) has a specific weight of 200 g/m2 to 480 g/m2, wherein the diameter of the drinking straw is or will be controlled or regulated via a distance of a sealer section (17) or a seam sealer from a garniture bed (18) of the formatting apparatus (16).

2. The method according to Claim 1, **characterized in that** a counter-bearing (24) presses against the overlapping region (23) during shaping and/or sealing.

3. The method according to Claim 1 or 2, **characterized in that** the overlapping region (23) is knurled and/or bonded for sealing.

4. The method according to Claim 3, **characterized in that** an adhesive (25) is applied to at least one side of the paper strip (12) in the overlapping region (23) for bonding, prior to the shaping or prior to the sealing.

5. The method according to Claim 4, **characterized in that** adhesive (25) is applied to two sides of the paper strip (12) which are in contact in the closed state, prior to the sealing.

6. The method according to any one of Claims 1 to 5, **characterized in that** a pressure is exerted on at least the outside edge (22) of the paper strip (12) in order to close the overlapping region (23).

7. The method according to any one of Claims 1 to 6, **characterized in that** the paper strip (12) is moistened prior to the shaping.

8. The method according to any one of Claims 1 to 7, **characterized in that** the paper strip (12) is printed prior to the shaping.

9. The method according to any one of Claims 1 to 8, **characterized in that** the outside edge (22) of the hollow tube (11) is embossed, pressed and/or beveled.

10. A drinking straw production apparatus (5), comprising
- a paper strip roll holder (30) and a paper strip pulling apparatus (31), which is configured to pull a paper strip (12) from a paper strip roll (13) arranged on the paper strip roll holder (30), wherein the paper strip (12) has a specific weight of 200 g/m2 to 480 g/m2,
- a formatting apparatus (16) which is configured to bend a paper strip (12) guided in a direction parallel to the longitudinal axis (14) of the paper strip (12) through the formatting apparatus (16) to form a hollow tube (11), wherein a part of the paper strip (12) overlaps a first edge (21) of the paper strip (12), so that an overlapping region (23) is produced, which is configured longitudinally axially on the hollow tube (11), and
- a cutting-to-length apparatus (32) which is configured to cut drinking straws (10) from the longitudinally axially conveyed hollow tube (11) to length,
wherein the formatting apparatus (16) has a sealer section (17) and/or a seam sealer, wherein the sealer section (17) or the seam sealer can be adjusted at a distance from a garniture bed (18), wherein a hot-melt gluing apparatus (34, 34') is provided for sealing the hollow tube (11).

11. The drinking straw production apparatus (5) according to Claim 10, **characterized in that** a compressed-air nozzle (27) is provided in the formatting apparatus (16), which is configured to direct compressed air (28) from internally onto the overlapping region (23).

12. The drinking straw production apparatus (5) according to Claim 10 or 11, **characterized in that** a knurling apparatus (33) is provided for sealing the hollow tube (11).

13. The drinking straw production apparatus (5) according to any one of Claims 10 to 12, **characterized in that** a moistening apparatus (35) is provided, which is configured to moisten the paper strip (12) prior to the shaping.

14. The drinking straw production apparatus (5) according to any one of Claims 10 to 13, **characterized in that** a roughening apparatus (36) is provided, which is configured to roughen at least one side of the paper strip (12) in the overlap region (23).

15. The drinking straw production apparatus (5) according to any one of Claims 10 to 14, **characterized in that** a pressing apparatus (37) and/or a tapering apparatus (38) is provided, which serve(s) to reduce the thickness of an outside edge (22) of the hollow tube (11).

16. The drinking straw production apparatus (5) according to any one of Claims 10 to 15, **characterized in that** the drinking straw production apparatus (5) is configured to produce at least two hollow tubes (11) at the same time, in particular parallel to one another.

## Revendications

1. Procédé de fabrication d'une paille pour boire (10) par un procédé par brins, présentant les caractéristiques suivantes :
- tirer une bande de papier (12) d'un rouleau de bande de papier (13, 13'), la bande de papier (12) présentant un premier bord (21) et un deuxième bord (22) qui sont agencés parallèlement à un axe longitudinal (14) de la bande de papier (12),
- amener la bande de papier (12) dans une direction de transport (15) à axe longitudinal vers un dispositif (16) de mise en forme,
- former la bande de papier (12) en un tube creux (11) dans le dispositif (16) de mise en forme, le premier bord (21) étant intérieur et le deuxième bord (22) étant extérieur, une partie de la bande de papier (12) chevauchant le premier bord (21) et définissant une zone de chevauchement (23) qui est ou sera formée sur le tube creux (11) selon l'axe longitudinal,
- fermer le tube creux (11) au moyen d'un dispositif (34, 34') d'encollage à la colle chaude, et
- découper le tube creux (11) en pailles (10),
la bande de papier (12) ayant un poids spécifique allant de 200g/m² à 480g/m², le diamètre de la paille pour boire étant commandé ou régulé par une distance entre une pièce de mise en forme supérieure (17) ou une plaque de jonction et une pièce de mise en forme inférieure (18) du dispositif (16) de mise en forme.

2. Procédé selon la revendication 1, **caractérisé en ce que**, lors de la mise en forme et/ou de la fermeture, un contre-appui (24) appuie contre la zone de chevauchement (23).

3. Procédé selon la revendication 1 ou la revendication 2, **caractérisé en ce que**, pour la fermeture, la zone de chevauchement (23) est moletée et/ou collée.

4. Procédé selon la revendication 3, **caractérisé en ce que**, pour le collage, un adhésif (25) est appliqué sur au moins une face de la bande de papier (12) dans la zone de chevauchement (23) avant la mise en forme ou avant la fermeture.

5. Procédé selon la revendication 4, **caractérisé en ce que** de l'adhésif (25) est appliqué sur deux faces de la bande de papier (12) qui se touchent à l'état fermé, avant la fermeture.

6. Procédé selon l'une des revendications 1 à 5, **caractérisé en ce que** pour fermer la zone de chevauchement (23), il est exercé une pression sur au moins le bord extérieur (22) de la bande de papier (12).

7. Procédé selon l'une des revendications 1 à 6, **caractérisé en ce que** la bande de papier (12) est humidifiée avant d'être formée.

8. Procédé selon l'une des revendications 1 à 7, **caractérisé en ce que** la bande de papier (12) est imprimée avant la mise en forme.

9. Procédé selon l'une des revendications 1 à 8, **caractérisé en ce que** le bord extérieur (22) du tube creux (11) est estampé, pressé et/ou chanfreiné.

10. Dispositif de fabrication de pailles à boire (5) comprenant
- un support (30) de rouleau de bande de papier et un dispositif (31) d'extraction de bande de papier adapté pour extraire une bande de papier (12) d'un rouleau de bande de papier (13) agencé sur le support (30) de rouleau de bande de papier, la bande de papier (12) ayant un poids spécifique allant de 200g/m² à 480g/m²,
- un dispositif (16) de mise en forme, qui est conçu pour plier une bande de papier (12) guidée dans une direction parallèle à l'axe longitudinal (14) de la bande de papier (12) par le dispositif (16) de mise en forme en un tube creux (11), une partie de la bande de papier (12) chevauchant un premier bord (21) de la bande de papier (12), de sorte qu'il en résulte une zone de chevauchement (23) qui est formée selon l'axe longitudinal sur le tube creux (11), et
- un dispositif (32) de coupe à longueur, qui est conçu pour couper à longueur des pailles (10) à partir du tube creux (11) transporté dans la direction longitudinale,
le dispositif (16) de mise en forme présentant une pièce de mise en forme supérieure (17) et/ou une plaque de jonction, la pièce de mise en forme supérieure (17) ou la plaque de jonction étant réglable en distance par rapport à une pièce de mise en forme inférieure (18), un dispositif (34, 34') d'encollage à la colle chaude étant prévu pour fermer le tube creux (11).

11. Dispositif de fabrication de pailles pour boire (5) selon la revendication 10, **caractérisé en ce qu'**une buse d'air comprimé (27) est prévue dans le dispositif (16) de mise en forme, laquelle est conçue pour diriger l'air comprimé (28) de l'intérieur sur la zone de chevauchement (23).

12. Dispositif de fabrication de pailles pour boire (5) selon la revendication 10 ou la revendication 11, **caractérisé en ce qu'**un dispositif de moletage (33) est prévu pour fermer le tube creux (11).

13. Dispositif de fabrication de paille pour boire (5) selon l'une des revendications 10 à 12, **caractérisé en ce qu'**il est prévu un dispositif d'humidification (35) configuré pour humidifier la bande de papier (12) avant la mie en forme.

14. Dispositif de fabrication de paille pour boire (5) selon l'une des revendications 10 à 13, **caractérisé en ce qu'**il est prévu un dispositif de grainage (36) configuré pour rendre rugueux au moins un côté de la bande de papier (12) dans la zone de chevauchement (23).

15. Dispositif de fabrication de pailles pour boire (5) selon l'une des revendications 10 à 14, **caractérisé en ce qu'**il est prévu un dispositif de pressage (37) et/ou un dispositif de biseautage (38) qui servent à réduire l'épaisseur d'un bord extérieur (22) du tube creux (11).

16. Dispositif de fabrication de pailles pour boire (5) selon l'une des revendications 10 à 15, **caractérisé en ce que** le dispositif de fabrication de pailles pour boire est conçu pour fabriquer au moins deux tubes creux (11) simultanément, notamment parallèlement l'un à l'autre.
